# EUROPEAN PATENT SPECIFICATION

(11) **EP 0 596 170 B1**
(45) Date of publication and mention of the grant of the patent: **14.01.1998**
(21) Application number: 92310177.8
(22) Date of filing: 06.11.1992
(51) Int. Cl.: H02P 7/68, H02P 7/298

(54) **Simultaneously operative multi-unit AC or DC series excitation motors or compound motors interlock driving circuit device**
Mehrere gleichzeitig und wahlweise mit Gleich- oder Wechselstrom betriebene Motoren mit Verbund- oder Reihenschluss-Erregerwicklungen und Schaltungsvorrichtung zur Synchronisationssteuerung
Circuit de commande interdépendante de plusieurs moteurs à courant alternatif ou courant continu à excitation série ou compound fonctionnant simultanément

(43) Date of publication of application: 11.05.1994
(73) Proprietor: Yang, Tai-Her, Taipei (TW)
(72) Inventor: Yang, Tai-Her, Taipei (TW)
(74) Representative: Arthur, Bryan Edward

(56) References cited:
- EP-A- 0 459 902
- EP-A- 0 539 637
- US-A- 3 596 161
- US-A- 4 408 147
- US-A- 4 935 678
- DATABASE WPIL Section PQ, Week 8849, 25 January 1989 Derwent Publications Ltd., London, GB; Class Q36, AN 88-352927 & SU-A-1 400 998 (SMOLENSK MOSC POWER) 7 June 1988

## Description

### BACKGROUND OF THE INVENTION

The conventional AC or DC series excitation motors concern specific characteristics, i.e. a likely square ratio of rotational speed to the load, that is rotational speed increasing very fast under no load. When each independent load or common load is driven by simultaneous operations and appears unsteady, we usually need to prevent partial load reducing so suddenly as to accelerate the related series excitation motors during operation, and particularly when the said load is jointly driven and an unsteady coupling relationship is formed between the load and motor assembly, the rotational speed of each respective motor will get quick or slow suddenly and further affect the stability of load, for example, when dual series excitation or compound motors are used to drive the wheels by the side of loading machine respectively, because the conventional dual series excitation (or compound) motors are inter-series or inter-parallel to drive the loading machine moving forward, owing to a change with the ground coupling state, motor assembly get quick and slow intermittently and are difficult for operation. Simultaneously operative multi-unit AC or DC series excitation motors or compound motors interlock driving circuit device according to the present invention is characterized to provide steady driving under the above-said load in an unsteady state.

SU-143719 discloses a tension regulator using two series excitation DC motors with the armature circuit of one motor connected in series with the excitation winding of the other motor, and the excitation winding of the first motor connected by a current sensor to the armature circuit of the other motor.

US Patent No. 4935678 discloses a speed controlled circuit in combination with an electrical motor for use in a hand-held food mixer operated by AC mains current. The motor is a universal type having a series connected armature winding and field winding. The field winding includes a plurality of taps, each selectively connector to the current source by a multi-point switch.

EP0459902 discloses an electric motor assembly including a plurality of motor armatures in which a diode is connected in series with each armature to suppress circulating currents.

According to the present invention, an electric motor assembly comprises a plurality of motor armatures each in series with a field winding arranged to provide a magnetic field for the next armature in cyclic sequence, a diode connected in series with each armature, and a resistor connected from an end of the armature nearest the series winding to a corresponding point of the next armature in sequence, the resistor acting to limit the circulating current between the two adjacent armatures. Thus, the power applied to loads by the motor armatures is maintained in a more steady manner.

### BRIEF DESCRIPTION OF THE DRAWINGS

FIG. 1 is a diagram showing dual series excitation (or compound) motors interlock driving circuit.

FIG. 2 is a diagram showing multi-unit series excitation (or compound) motors interlock driving circuit.

FIG. 3 is a diagram showing a tapped-control circuit that can control operational speed and switch operational ratio.

FIG. 4 is a diagram showing an independent tapped-switch ratio operation and speed control circuit for each field, and

FIG. 5 is an example showing the provision of additional shunt windings.

### DETAILED DESCRIPTION OF THE INVENTION

The conventional AC or DC series excitation motors concern specific characteristics, i.e. a likely square ratio of rotational speed of the load, that is rotational speed increasing very fast under no load. When each independent load or common load is driven by simultaneous operations and appears unsteady, we usually need to prevent partial load reducing so suddenly as to accelerate the related series excitation motors during operation, and particularly when the same load is jointly driven and an unsteady coupling relationship is formed between the load and motor assembly, the rotational speed of each respective motor will get quick or slow suddenly and further affect the stability of load, for example, when dual series excitation or compound motors are used to drive the wheels by the side of loading machine respectively, because the conventional dual series excitation (or compound) motors are inter-series or inter-parallel to drive the loading machine moving forward, owing to a change with the ground coupling state, motor assembly get quick and slow intermittently and are difficult for operation. Simultaneously operative multi-unit AC or DC series excitation motors or compound motors interlock driving circuit device according to the present invention is characterized to provide steady driving under the above-said load in an unsteady state.

The embodiments according to the present invention will be described together with the accompanying drawings:

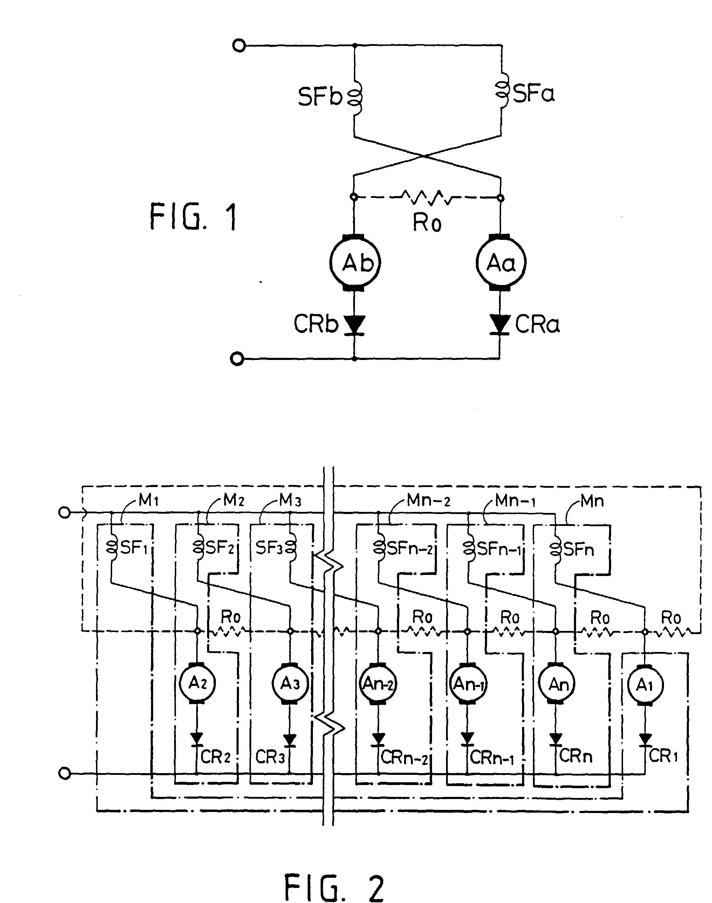

Referring to FIG. 1, the first series excitation motor assembly A have a series excitation magnetic winding SFa and armature Aa, and the second series excitation motor assembly B have a series excitation magnetic winding SFb and armature Ab, wherein the series excitation magnetic winding SFa of the first series excitation motor assembly are in series with the armature Ab of the second series excitation motor assembly, and the series excitation magnetic winding SFb of the second series excitation motor assembly are in series with the armature Aa of the first series excitation motor assembly. When the load is steady and even during the operation of the two motors, equal current amount passes SFa, Aa, SFb, Ab and operational speed is equal too; and the speed of the two motors is increased/decreased simultaneously accompanying the load, when the motor assembly such as motor assembly A's load is increased, the rotational speed of armature Aa is reduced and current is increased, owing to the armature Aa being series with the magnetic field SFb of motor B, therefore the increase of SFb current enables armature Ab of motor assembly B enhanced by the magnetic field, and further the rotational speed of armature Ab of motor assembly B is reduced accordingly; in like manner, when the load of motor assembly A gets weaker suddenly, armature Aa current is decreased and the series magnetic winding SFb gets weaker too to reduce magnetic field's affection on armature Ab of motor assembly B, and rotary speed of armature Ab of motor assembly B gets faster; in like manner, when the load of motor assembly B is increased, owing to armature Ab series with magnetic winding SFa of motor assembly A, rotational speed of motor assembly A is reduced; in like manner, when the load of motor assembly B is reduced suddenly, motor assembly B gets faster or in idle run, the field of SFb is reduced to accelerate armature Aa of motor assembly A.

Besides, as shown in FIG. 1 the series connections between armature Aa and field SFb, the series connections between armature Ab and SFa are added equal-current resistance Ro subject to the requirement so as to limit the circulating current between two armatures when armature Ab and armature Aa are driven to appear transient of different voltage, to prevent armature being burned down.

Further, diodes CRa, CRb are connected in series with the armatures Aa, Ab to suppress circulating currents.

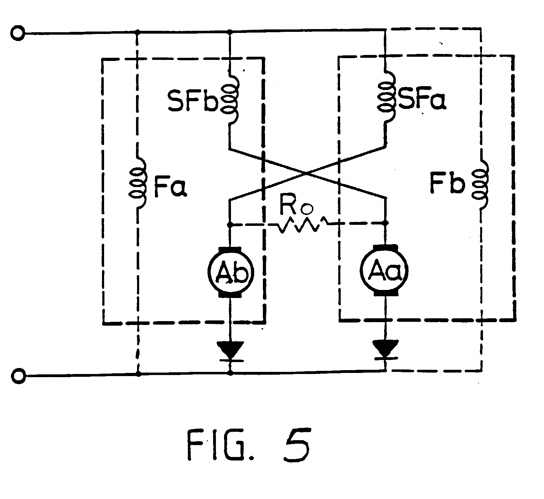

Shunt field windings Fa, Fb may be provided for each armature, as will be described below with reference to Figure 5.

In like manner, multi-unit state shown in FIG. 2 is the same.

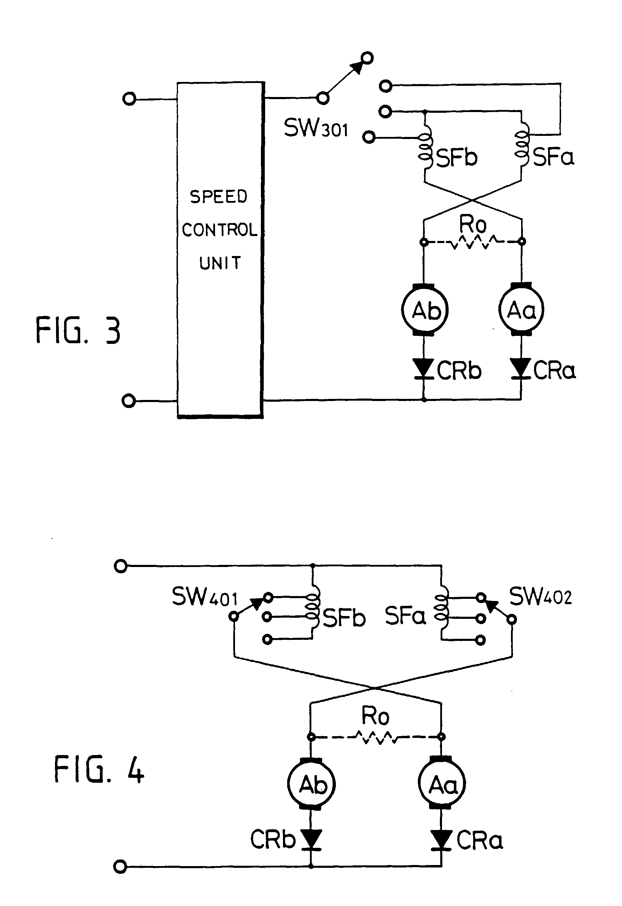

With characteristics as mentioned above, simultaneously operative multi-unit AC or DC series excitation motors or compound motors interlock driving circuit device according to the present invention is particularly suitable for the operation in parallel with series excitation (or compound) AC or DC motors that are used on an unsteady load, and particularly being operative to enable the rotational speed of the two motors in likely the same characteristics; in actual practice, we may further use electric dynamic or solid elements for motor speed control or driving control by changing rotational speed and direction of driving motor through conventional chopper, phase control or voltage control, etc. Besides, due to the two series windings SFa and SFb having an interconnected connector, we use SFa and SFb to withdraw the tap of winding (or connector between SFa and SFb included) as a power input end to control operational ratio between the two motors as shown in FIG. 3, a diagram showing a tapped-control circuit that can control operational speed and switch operational ratio.

To switch operational ratio as mentioned above, we may further use the independent tapped-switch ratio operation and speed control circuit for each field as shown in FIG. 4 wherein the fields SFa and SFb respectively having a tap leading to the distribution connection of selective switch SW401 and SW402, and common connections of selective switch respectively leading to armature Aa and Ab, so that we may select steady operation ratio of the two motors by means of each selective switch; if intend to increase motor B's operational speed and reduce motor A's speed, when SFb is switched less excitation gate number against Aa, armature Ab of motor B appears increased in operational speed, and SFa excitation current is increased to make motor A slow down, and the like on the contrary. To switch operational direction of motor from FIG. 1 to FIG. 4, it is only necessary to exchange the two taps of either field winding or armature under conventional coupling.

Figure 5 shows a modification of the circuit of Figure 1 in which an additional shunt winding, Fb, Fa, is provided for each of the armatures Aa, Ab. The resistor Ro, and diodes CRa, CRb are incorporated in this circuit.

Similarly, shunt windings can also be incorporated in the circuits of Figures 2, 3 and 4.

## Claims

1. An electric motor assembly comprising a plurality of motor armatures (Aa,Ab) each in series with a field winding (SFb,SFa) arranged to provide a magnetic field for the next armature in cyclic sequence, a diode (CRa,CRb) connected in series with each armature (Aa,Ab), and a resistor (R₀) connected from an end of the armature (Aa,Ab) nearest the series winding to a corresponding point of the next armature in sequence, the resistor (R₀) acting to limit the circulating current between the two adjacent armatures (Aa,Ab).

2. An electric motor assembly according to claim 1 comprising two motor armatures (Aa,Ab) and two series field windings (SFb,SFa).

3. An electric motor assembly according to claim 1 or 2 in which the series windings are provided with tappings connected to switching means (SW301,SW401) for speed control.

4. An electric motor assembly according to any preceding claim further provided with a shunt winding (Fa,Fb) for each armature.

## Patentansprüche

1. Elektromotoreinheit mit einer Mehrzahl von Motorankern (Aa, Ab), die jeder mit einer Feldwicklung (SFb, SFa) in Reihe geschaltet sind, die so angeordnet ist, um ein Magnetfeld für den nächsten Anker in zyklischer Folge zur Verfügung zu stellen, je einer mit jedem Anker (Aa, Ab) in Reihe geschalteten Diode (CRa, CRb) und mit einem Widerstand (Rₒ), der zwischen einem der Reihenschlußwicklung nächstgelegenen Ende des Ankers (Aa, Ab) und einem entsprechenden Punkt des nächstfolgenden Ankers eingefügt ist, wobei der Widerstand (Rₒ) wirksam ist, um den Kreisstrom zwischen den zwei benachbarten Ankern (Aa, Ab) zu begrenzen.

2. Elektromotoreinheit nach Anspruch 1, die zwei Motoranker (Aa, Ab) und zwei Reihenschlußfeldwicklungen (SFb, SFa) aufweist.

3. Elektromotoreinheit nach Anspruch 1 oder 2, bei der die Reihenschlußwicklungen mit Anzapfungen versehen sind, die mit Schaltermitteln (SW301, SW401) für die Drehzahlsteuerung verbunden sind.

4. Elektromotoreinheit nach irgendeinem vorausgehenden Anspruch, die außerdem mit einer Nebenschlußwicklung (Fa, Fb) für jeden Anker versehen ist.

## Revendications

1. Ensemble de moteur électrique comprenant une pluralité d'induits moteur (Aa, Ab), chacun étant monté en série avec un enroulement inducteur (SFb, SFa) agencé pour fournir un champ magnétique à l'induit suivant en séquence cyclique, une diode (CRa, CRb) reliée en série avec chaque induit (Aa, Ab), et une résistance (R₀) reliée depuis une extrémité de l'induit (Aa, Ab), la plus proche de l'enroulement en série, à un point correspondant de l'induit suivant dans la séquence, la résistance (R₀) servant à limiter le courant circulant entre les deux induits adjacents (Aa, Ab).

2. Ensemble de moteur électrique selon la revendication 1, comprenant deux induits moteur (Aa, Ab) et deux enroulements inducteurs série (SFb, SFa).

3. Ensemble de moteur électrique selon la revendication 1 ou 2, dans lequel les enroulements série sont pourvus de prises reliées à des moyens de commutation (SW301, SW401) pour commander la vitesse.

4. Ensemble de moteur électrique selon l'une quelconque des revendications précédentes, pourvue en outre d'un enroulement en dérivation (Fa, Fb) pour chaque induit.
